# EUROPEAN PATENT APPLICATION

(11) **EP 4 580 165 A1**
(43) Date of publication of application: **02.07.2025**
(21) Application number: 23873226.7
(22) Date of filing: 27.09.2023
(51) Int. Cl.: H04L 67/564, G06F 9/54, G06F 15/173

(54) **ELECTRONIC DEVICE AND COMMUNICATION METHOD BETWEEN APPLICATIONS**

(30) Priority: 30.09.2022 KR 20220125372; 03.11.2022 KR 20220145198
(71) Applicant: Samsung Electronics Co., Ltd., Suwon-si, Gyeonggi-do 16677 (KR)
(72) Inventor: PARK, Yoonsun, Suwon-si, Gyeonggi-do 16677 (KR); KIM, Kihun, Suwon-si, Gyeonggi-do 16677 (KR); WOO, Hyungduck, Suwon-si, Gyeonggi-do 16677 (KR)
(74) Representative: Gulde & Partner
(86) International application number: PCT/KR2023/015062
(87) International publication number: WO 2024/072117

(57) **Abstract**

A communication method between applications, according to an embodiment of the present disclosure, may comprise the steps of: controlling a broadcast message to be generated through a sender application; when a framework receives the broadcast message, determining whether an action is registered in an owner list; determining whether an owner of the action registered in the owner list matches the sender application; and if the owner of the action registered in the owner list matches the sender application, controlling the broadcast message to be transmitted from the framework to a receiver application.

## Description

### [Technical Field]

Various embodiments of the disclosure relate to an electronic device and a communication method between applications included in the electronic device.

### [Background Art]

Various electronic devices such as a smartphone, a table PC, a portable multimedia player (PMP), a laptop PC, and a wearable device may include various types of applications as the portability and usability are maximized.

For a user's convenience, an event or an action occurring in a specific application needs to be transmitted to another application. An electronic device may transmit a message between applications by using a communication method such as, employing a broadcast receiver.

### [Disclosure of Invention]

### [Technical Problem]

When a message is transmitted or received to transmit an event between applications included in an electronic device, an unintended application or a malicious application transmits the same event or action as an authorized application to another application, which causes the electronic device to malfunction.

### [Solution to Problem]

An electronic device and a communication method between applications of the disclosure are to verify a sender application and a message in a framework area of the electronic device and transmit the message to a receiver application. However, the disclosure is not limited thereto. An electronic device according to an embodiment of the disclosure may include a memory and a processor.

The processor according to an embodiment of the disclosure may perform control to generate a broadcast message through a sender application, in case that a framework receives the broadcast message, determine whether an action is registered in an owner list, determine whether an owner of the action registered in the owner list matches the sender application, and in case that the owner of the action registered in the owner list matches the sender application, perform control to transmit the broadcast message from the framework to a receiver application.

A communication method between applications according to an embodiment of the disclosure may include performing control to generate a broadcast message through a sender application, in case that a framework receives the broadcast message, determining whether an action is registered in an owner list, determining whether an owner of the action registered in the owner list matches the sender application, and in case that the owner of the action registered in the owner list matches the sender application, performing control to transmit the broadcast message from the framework to a receiver application.

An electronic device and a communication method between applications according to an embodiment of the disclosure may verify a sender application and a message in a framework area of the electronic device and transmit the message to a receiver application, thereby increasing the security strength of communication between applications. However, the disclosure is not limited thereto.

### [Advantageous Effects of Invention]

An electronic device and a communication method between applications according to an embodiment of the disclosure can verify a sender application and a message in a framework area of the electronic device without separate security modification in an application area, and transmit the message to a receiver application, thereby increasing the security strength of communication between applications. However, the effects are not limited thereto.

An electronic device and a communication method between applications according to an embodiment of the disclosure can verify a sender application and a message in a framework area of the electronic device without separate security modification in an application area, and transmit the message to a receiver application, thereby reducing development costs. However, the effects are not limited thereto.

### [Brief Description of Drawings]

FIG. 1 is a block diagram illustrating an electronic device in a network environment according to various embodiments of the disclosure.
FIG. 2 is a block diagram illustrating a program according to an embodiment of the disclosure.
FIG. 3 is a flow chart illustrating a communication method between applications according to an embodiment of the disclosure.
FIG. 4 is a block diagram illustrating an operation of a framework according to an embodiment of the disclosure.
FIG. 5 is a block diagram illustrating an operation of verifying a sender application by a receiver application according to an embodiment of the disclosure.
FIG. 6 is a block diagram illustrating an operation of transmitting a broadcast message to a receiver application by an electronic device according to an embodiment of the disclosure.

### [Mode for the Invention]

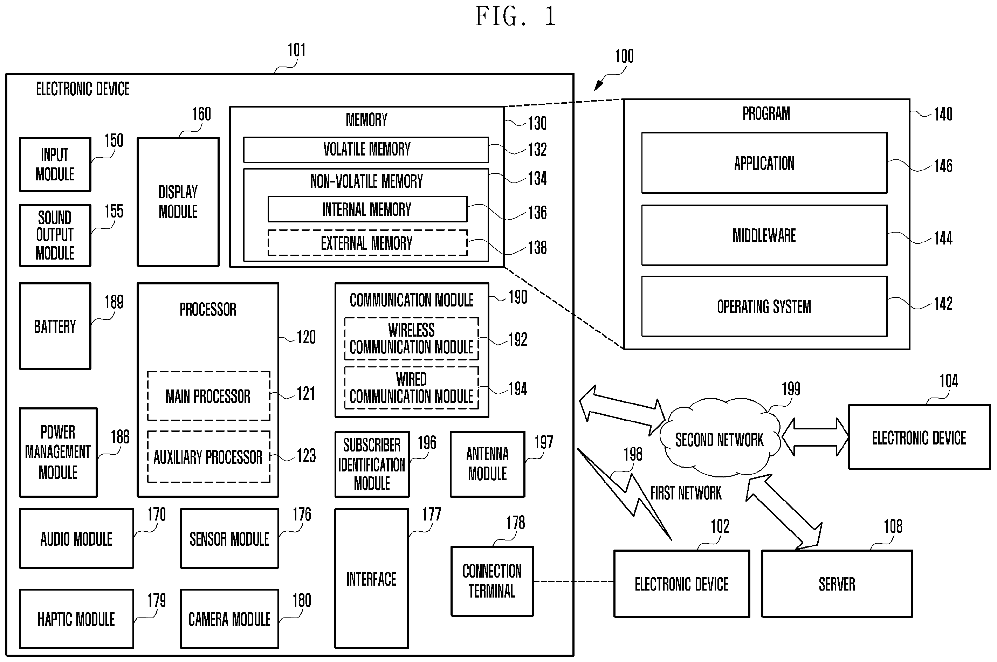

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

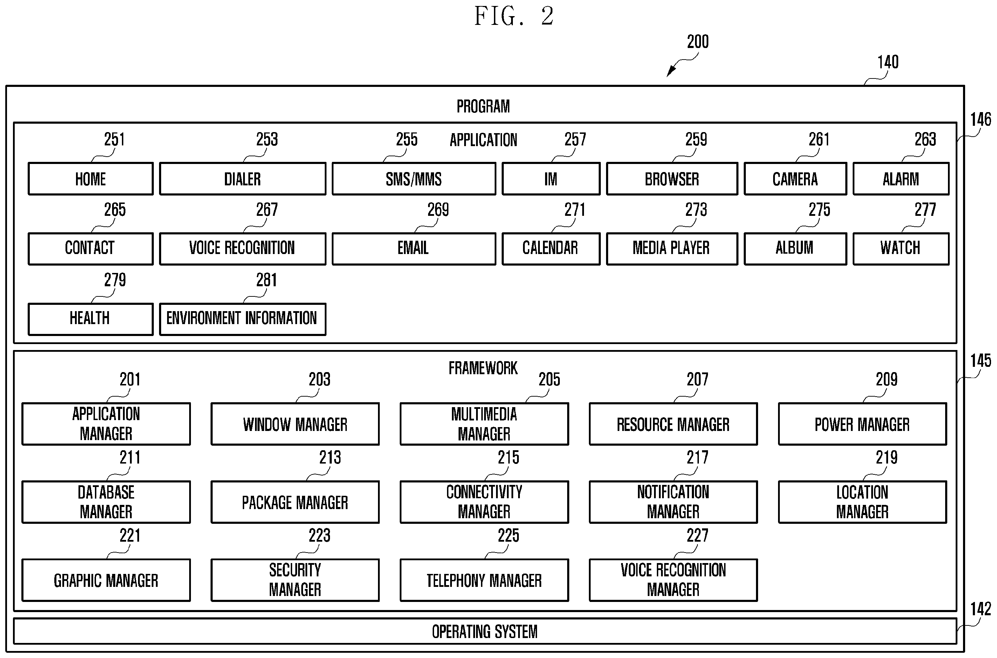

FIG. 2 is a block diagram 200 illustrating a program 140 according to an embodiment of the disclosure.

According to an embodiment, the processor 140 may include an operating system 142 for controlling one or more resources of the electronic device 101, a framework 145, or an application 146 executable in the operating system 142. The operating system 142 may include, for example, Android^{™}, iOS^{™}, and Windows^{™}. At least part of the program 140, for example, may be pre-loaded on the electronic device 101 during manufacture, or may be downloaded from or updated by an external electronic device (e.g., the electronic device 102 or 104 or the server 108) in a use environment of a user.

The operating system 142 may control (e.g., allocate or deallocate) a system resource (e.g., process, memory, or power source) of the electronic device 101. The operating system 142, additionally or alternatively, may include one or more driver programs for driving other hardware devices of the electronic device 101, for example, the input device 150, the sound output device 155, the display device 160, the audio module 170, the sensor module 176, the interface 177, the haptic module 179, the camera module 180, the power management module 188, the battery 189, the communication module 190, the subscriber identification module 196, or the antenna module 197.

The framework 145 may provide various functions to the application 146 such that the application 146 can use a function or information provided from one or more resources of the electronic device 101. The framework 145 may include, for example, an application manager 201, a window manager 203, a multimedia manager 205, a resource manager 207, a power manager 209, a database manager 211, a package manger 213, a connectivity manager 215, a notification manager 217, a location manager 219, a graphic manager 221, a security manager 223, a telephony manager 225, or a voice recognition manager 227. However, the framework is not limited thereto, and may include various mangers or agents.

The application manager 201, for example, may manage a life cycle of the application 146. The window manager 203, for example, may manage a GUI resource used on a screen. The multimedia manager 205, for example, may identify a format required to play media files, and may encode or decode the media file by using a codec appropriate for the corresponding format. The resource manager 207, for example, may manage a source code of the application 146 or a memory space. The power manager 209, for example, may manage the capacity, temperature, or power of the battery, and may determine or provide power information required for the operation of the electronic device 101 by using corresponding information among the capacity, temperature, or power of the battery. According to an embodiment, the power manger 209 may interwork with a basic input/output system (BIOS).

The database manager 211, for example, may generate, search, or change a database to be used by the application 146. The package manager 213, for example, may manage installation or update of an application that is distributed in the form of a package file. The connectivity manager 215, for example, may manage a wireless or wired connection between the electronic device 101 and the external electronic device. The notification manger 217, for example, may provide a function for notifying a user of an occurring event (e.g., a call, a message, or a notification). The location manager 219, for example, may manage location information of the electronic device 101. The graphic manager 221, for example, may manage a graphic effect to be provided to the user, or a user interface related thereto. The security manager 223, for example, may provide system security or user authentication. The telephony manager 225, for example, may manage a voice call function or a video call function of the electronic device 101. The voice recognition manager 227, for example, may transmit a user's voice data to the server 108, and receive a command corresponding to a function to be executed on the electronic device 101, based on the corresponding voice data, or text data converted based on the corresponding voice data. According to an embodiment, the middleware 244 may dynamically delete some existing elements or may add new elements. According to an embodiment, at least a part of the framework 145 may be included as a part of the operating system 142, or may be implemented as software separate from the operating system 142.

The application 146 may include, for example, a home 251, a dialer 253, an SMS/MMS 255, an instant message (IM) 257, a browser 259, a camera 261, an alarm 263, a contact 265, a voice recognition 267, an email 269, a calendar 271, a media player 273, an album 275, a watch 277, health 279 (e.g., measurement of the amount of workout or blood sugar), or environment information 281 (e.g., air pressure, humidity, or temperature information). However, the application is not limited thereto and may include various applications.

According to an embodiment, the application 146 may further include an information exchange application (not shown) capable of supporting information exchange between the electronic device 101 and the external electronic device. The information exchange application, for example, may include a notification relay application for transferring designated information (e.g., a call, a message, or a notification) to the external electronic device or a device management application for managing the external electronic device. The notification relay application may transfer notification information corresponding to an event (e.g., receipt of an email) occurring at another application (e.g., the email application 269) of the electronic device 101 to the external electronic device, or may receive notification information from the external electronic device and provide the notification information to the user of the electronic device 101. The device management application, for example, may control power (e.g., turn-on or turn-off) or the function (e.g., adjustment of the brightness, resolution, or focus of the display device 160 or the camera module 180) of the external electronic device communication with the electronic device 101 or some elements thereof (e.g., the display device 160 or the camera module 180). The device management application, additionally or alternatively, may support installation, deletion, or update of an application running on the external electronic device.

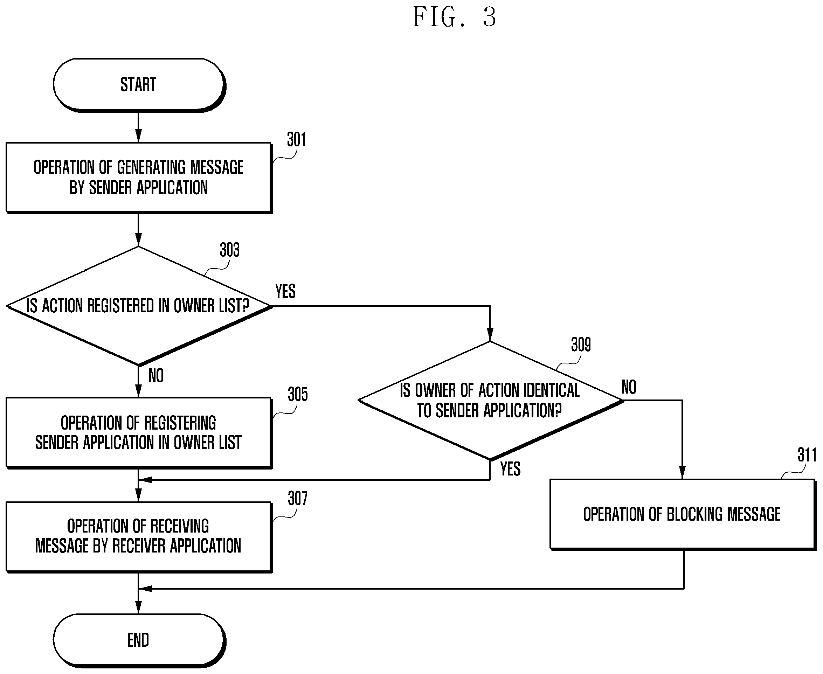

FIG. 3 is a flow chart illustrating a communication method between applications according to an embodiment of the disclosure.

In an embodiment of the disclosure, the electronic device 101, under the control of the processor 120, may generate, in operation 301, a message of a sender application.

In an embodiment of the disclosure, the message generated by the sender application may be a broadcast message. The sender application may call, for example, a "sendbroadcast()" function in order to generate a broadcast message.

In an embodiment of the disclosure, the broadcast message may be wrapped in an intent object for identifying an event in which a task string is generated.

For example, when various system events such as system booting or the start of device charging occurs, the electronic device 101 may generate, based on an application for managing the various system events, a broadcast message under the control the processor 120. Other applications receiving the broadcast message, under the control of the processor 120, may identify an action included in the received broadcast message or intent and perform an operation according to the action.

In an embodiment of the disclosure, the action may be an event relating to a system included in the electronic device 101 or a command relating to an operation that needs to be performed by a receiver application.

For example, when the broadcast message indicates "android.intent.action.BATTERY_LOW", the message may correspond to an action indicating that a battery of the electronic device 101 is in a low-power state, and when the broadcast message indicates "android.intent.action.CALL", the message may correspond to a command for causing a phone application of the electronic device 101 to perform a call operation to another person.

In an embodiment of the disclosure, the electronic device 101, under the control of the processor 120, may identify, in operation 303, whether the action is registered in an owner list. The electronic device 101, under the control of the processor 120, may control the sender application to generate a message and transmit the same to a framework 145 in operation 301.

In an embodiment of the disclosure, the electronic device 101, under the control of the processor 120, may identify, in operation 303, whether the action is registered in an owner list.

In an embodiment of the disclosure, in operation 303, the electronic device 101, under the control of the processor 120, may identify, based on the framework 145, whether the action is registered in an owner list.

In an embodiment of the disclosure, the electronic device 101, under the control of the processor 120, may identify an action and identify an owner of the received action, based on the framework 145, in operation 303. The framework 145 may register, under the control the processor 120, an application that has first transmitted the action as an owner of the action. The framework 145, under the control of the processor 120, may manage registration and/or deletion of an owner and an action corresponding to the owner in and/or from the owner list.

In an embodiment of the disclosure, the electronic device 101, under the control of the processor 120, may proceed to operation 305 when the action transmitted through the broadcast message is not an action registered in the owner list in operation 303.

In an embodiment of the disclosure, the electronic device 101, under the control of the processor 120, may proceed to operation 309 when the action transmitted through the broadcast message is an action registered in the owner list in operation 303.

In an embodiment of the disclosure, the electronic device 101, under the control of the processor 120, may register the sender application in the owner list in operation 305. The owner list may be managed through the framework 145.

In an embodiment of the disclosure, when the action transmitted through the broadcast message is not an action registered in the owner list, the electronic device 101, under the control of the processor 120, may determine that an application that has transmitted the broadcast message is a pre-loaded application or an initially installed application. When the broadcast message including the action is transmitted from the pre-loaded application or the initially installed application to the framework 145, the electronic device 101, under the control of the processor 120, may register the sender application as an owner and match the owner and the action of the sender application so as to manage the same in the owner list.

In an embodiment of the disclosure, in the owner list, modification and management of the action and the owner of the action may be managed through the framework 145 of the electronic device 101, and the application may only have read access. The owner list may be managed, for example, as an extensible markup language (XML) file. The owner list may include multiple owners for an action. The electronic device 101 may record multiple owners for an action in the owner list in case that an application other than an intended application for message transmission performs the broadcast operation first and is registered as an owner of the action. After multiple owners for the action are recorded in the owner list, the receiver application may transmit a response to the framework 145 such that a normally operated sender application can be processed as an owner of the action.

The electronic device 101 may transmit owner information to the receiver application through the framework 145.

In an embodiment of the disclosure, the electronic device 101, under the control of the processor 120, may cause the receiver application to receive the message in operation 307.

In an embodiment of the disclosure, the electronic device 101, under the control of the processor 120, may cause the receiver application to receive the broadcast message generated by the sender application, in operation 307.

In an embodiment of the disclosure, the electronic device 101, under the control of the processor 120, may cause the receiver application to receive the broadcast message generated by the sender application and perform the action included in the broadcast message, in operation 307.

In an embodiment of the disclosure, the electronic device 101, under the control of the processor 120, may determine, based on the framework 145, whether the owner of the action included in the owner list is identical to the sender application in operation 309.

In an embodiment of the disclosure, when the owner of the action included in the owner list is identical to the sender application, the electronic device 101, under the control of the processor 120, may proceed from operation 309 to operation 307.

In an embodiment of the disclosure, when the owner of the action included in the owner list is not identical to the sender application, the electronic device 101, under the control of the processor 120, may proceed from operation 309 to operation 311.

In an embodiment of the disclosure, when the owner of the action included in the owner list is not identical to the sender application, the electronic device 101, under the control of the processor 120, may block, based on the framework 145, the broadcast message in operation 311. When the broadcast message is blocked, the broadcast message may not be transmitted to the receiver application.

In an embodiment of the disclosure, the receiver application, under the control of the processor 120, may request reading of the owner list from the framework 145. The owner list may be transmitted in the form of a function. For example, a function for calling the owner list from the framework 145 by the receiver application may be "onReceiver()". The owner list may be transmitted, under the control of the processor 120, from the framework 145 to the receiver application through an application programming interface (API). The owner list may be transmitted, under the control of the processor 120, from the framework 145 to the receiver application through a call function.

In an embodiment of the disclosure, the receiver application, under the control of the processor 120, may check the sender application by overriding a function including the owner list. The receiver application, under the control of the processor 120, may verify the sender application based on the owner list and verify whether the owner of the action included in the broadcast message matches the sender application. The receiver application, under the control of the processor 120, may verify the sender application based on the owner list and verify whether the broadcast message is a receivable broadcast message.

In an embodiment of the disclosure, when the owner of the action included in the owner list matches the sender application, the receiver application, under the control of the processor 120, may transmit, to the framework 145, a first response message of verifying that reception from the sender application is allowed.

In an embodiment of the disclosure, when the framework 145, under the control of the processor 120, receives the first response message from the receiver application, the framework 145, under the control of the processor 120, may register and manage the sender application in the owner list such that the sender application corresponds to the action included in the broadcast message and the owner of the action.

In an embodiment of the disclosure, when the owner of the action included in the owner list does not match the sender application, the receiver application, under the control of the processor 120, may transmit, to the framework 145, a second response message of verifying that the sender application is untrusted.

In an embodiment of the disclosure, when the framework 145, under the control of the processor 120, receives the second response message from the receiver application, the framework 145, under the control of the processor 120, block the sender application from transmitting the broadcast message to the receiver application.

In an embodiment of the disclosure, when receiving the broadcast message from the sender application, the framework 145, under the control of the processor 120, may determine whether the sender application included in the broadcast message is identical to the owner of the action included in the owner list in operation 309. When the sender application is different from the owner, the framework 145 may call an owner list transmission function to transmit the owner list to the receiver application. The receiver application may verify whether the sender application is an intended application for message transmission by overriding the function received from the framework 145. The receiver application may verify whether the sender application is an intended application for message transmission and transmit a response to the framework 145. The framework 145 may transmit the message to the receiver application when it is determined that the sender application is an intended application for message transmission according to the response received from the receiver application. The framework 145 may block the message to a receiver when it is determined that the sender application is not an intended application for message transmission according to the response received from the receiver application.

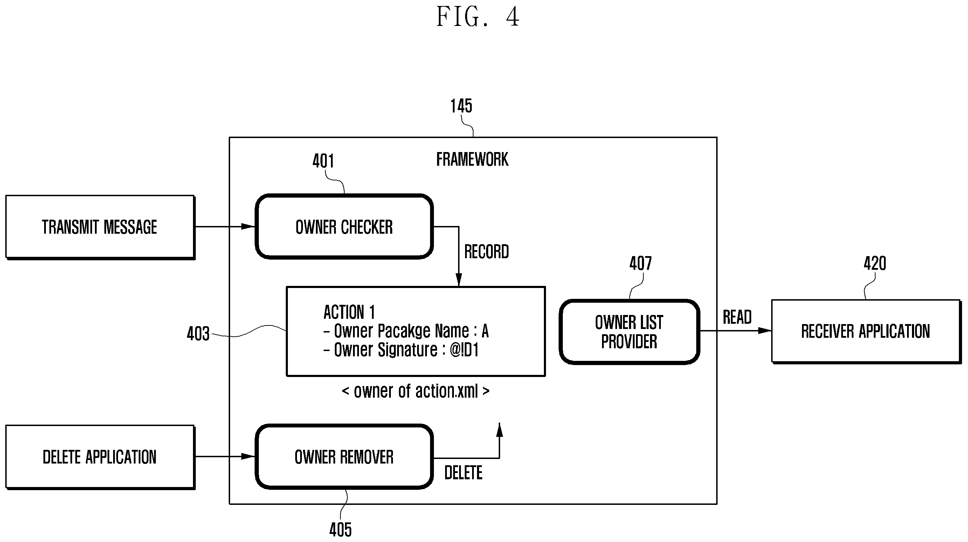

FIG. 4 is a block diagram illustrating an operation of a framework 145 according to an embodiment of the disclosure.

In an embodiment of the disclosure, the framework 145 may include an owner checker 401, an owner list 403, an owner remover 405, and an owner list provider (or get owner) 407.

In an embodiment, when receiving a broadcast message from a sender application, the framework 145, under the control of the processor 120, may compare an owner of an action included in the owner list 403 with the sender application having transmitted the broadcast message. The broadcast message may include information on an action and an owner of the action.

In an embodiment of the disclosure, when the owner of the action included in the owner list 403 matches the sender application having transmitted the broadcast message, the framework 145, under the control of the processor 120, may transmit the broadcast message to a receiver application 420.

Referring to FIG. 4, the owner list 403 may include an action (action 1 of FIG. 4) and information on an owner ("owner package name: A" and owner signature: @!D1" of FIG. 4) of the action. The owner list 403 may be managed in the form of an XML file. The owner list is not limited thereto, and the owner list 403 may be managed in various file formats guaranteeing integrity.

In an embodiment of the disclosure, when the owner of the action included in the owner list 403 is different from the sender application having transmitted the broadcast message, the framework 145, under the control of the processor 120, may block the broadcast message from being transmitted to the receiver application 420.

In an embodiment of the disclosure, the framework 145, under the control of the processor 120, may compare, using the owner checker 401, the owner of the action included in the owner list 403 with the sender application having transmitted the broadcast message.

In an embodiment of the disclosure, when receiving the broadcast message, the receiver application 420 may perform the action included in the broadcast message.

In an embodiment of the disclosure, the receiver application 420 may request owner list information from the framework 145 and may perform again a verification procedure of verifying, based on the owner list information, whether the owner of the action included in the owner list 403 matches the sender application having transmitted the broadcast message. An operation in which the receiver application 420 verifies whether the owner of the action included in the owner list 403 matches the sender application having transmitted the broadcast message may be omitted.

In an embodiment of the disclosure, when receiving the owner list information request from the receiver application 420, the framework 145, under the control of the processor 120, may transmit the owner list to the receiver application 420 through the owner list provider 407. When receiving the owner list information request from the receiver application 420, the framework 145, under the control of the processor 120, may transmit the owner list to an API. When receiving the owner list information request from the receiver application 420, the framework 145, under the control of the processor 120, may transmit the owner list by using a call function.

In an embodiment of the disclosure, when receiving a message about application deletion, the framework 145, under the control of the processor 120, may delete the owner of the action corresponding to the deleted application from the owner list 403.

In an embodiment, when receiving the message about application deletion, the framework 145, under the control of the processor 120, may delete, based on the owner remover 405, the owner of the action corresponding to the deleted application from the owner list 403.

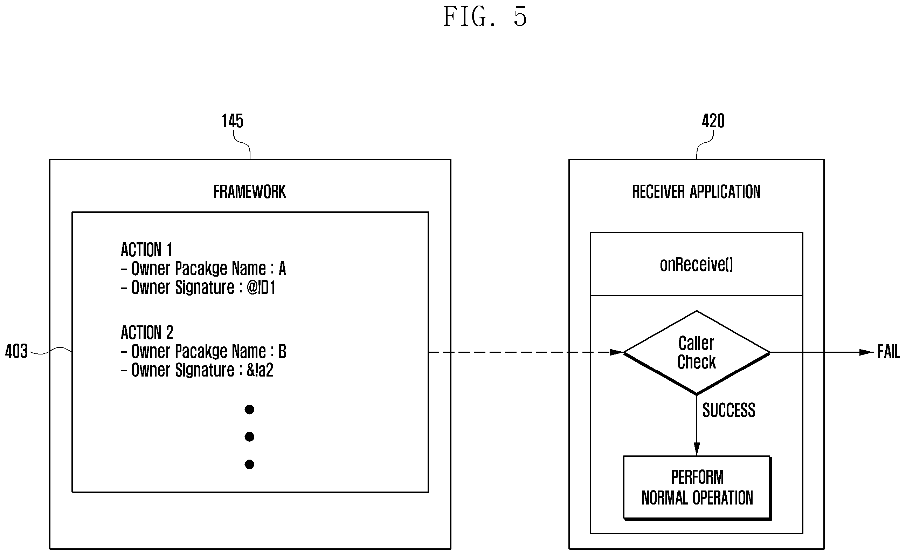

FIG. 5 is a block diagram illustrating an operation of verifying a sender application by a receiver application 420 according to an embodiment of the disclosure.

In an embodiment of the disclosure, a receiver application may request reading an owner list through the framework 145. The receive application, under the control of the processor 120, may check a sender application by overriding a function including the owner list. The receiver application, under the control of the processor 120, may verify whether a sender application having transmitted a broadcast message corresponds to an application required for an operation of the receiver application through a caller checker function of checking a sender application by overriding a function including the owner list.

In an embodiment of the disclosure, the receiver application, under the control of the processor 120, may verify, based on the owner list, a sender application and verify whether the owner of the action included in the broadcast message matches the sender application.

In an embodiment of the disclosure, when the owner of the action included in the owner list matches the sender application, the receiver application, under the control of the processor 120, may transmit, to the framework 145, a first response message of verifying that reception from the sender application is allowed.

In an embodiment of the disclosure, when receiving the first response message from the receiver application, the framework 145, under the control of the processor 120, may register and manage, in the owner list, the sender application as an action included in the broadcast message and an owner of the action.

In an embodiment of the disclosure, when the owner of the action included in the owner list does not match the sender application, the receiver application, under the control of the processor 120, may transmit, to the framework 145, a second response message of identifying that the sender application is untrusted.

In an embodiment of the disclosure, when receiving the second response message from the receiver application, the framework 145, under the control of the processor 120, may block the sender application from transmitting the broadcast message to the receiver application.

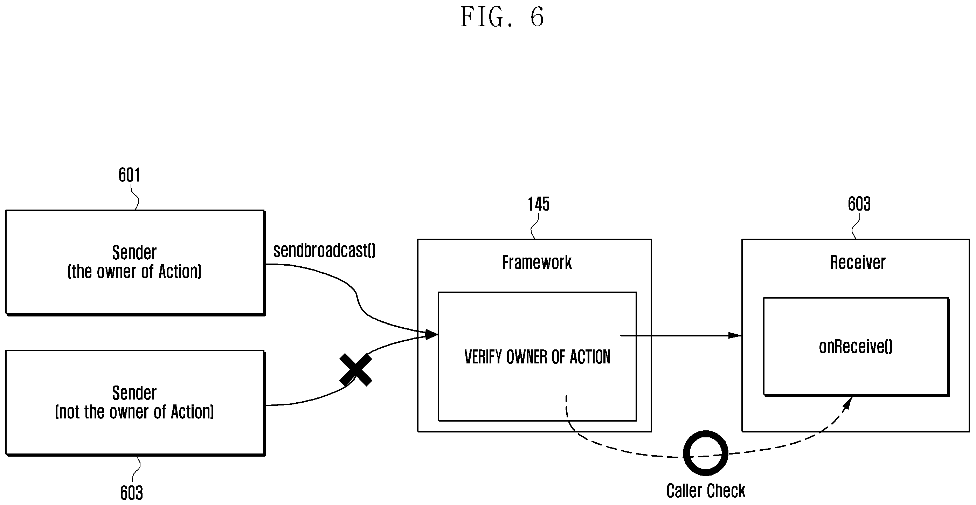

FIG. 6 is a block diagram illustrating an operation of transmitting a broadcast message to a receiver application by an electronic device 101 according to an embodiment of the disclosure.

In an embodiment of the disclosure, the electronic device 101 may include multiple sender applications 601 and 603, a framework 145, and a receiver application 603.

In an embodiment of the disclosure, each of a first sender application 601 and a second sender application 603, under the control of the processor 120, may generate a broadcast message and transmit the same to the receiver application 603.

In an embodiment of the disclosure, the framework 145, under the control of the processor 120, may compare the first sender application 601 and the second sender application 603 with an owner of an action included in an owner list. In this case, when the second sender application 603 is not registered in the owner list, the framework 145, under the control of the processor 120, may block the broadcast message generated by the second sender application 603 from being transmitted to the receiver application 630. When the first sender application 601 is registered in the owner list, the framework 145, under the control of the processor 120, may transmit the broadcast message generated by the first sender application 603 to the receiver application 630.

In an embodiment of the disclosure, the receiver application may receiver reading the owner list through the framework 145. The receiver application, under the control of the processor 120, may check the sender application by overriding a function including the owner list. An operation of checking the sender application by the receiver application may be omitted.

In an embodiment of the disclosure, an electronic device 101 may include a memory 130 and a processor 120.

In an embodiment of the disclosure, the processor 120 may control a broadcast message to be generated through a sender application, in case that a framework 145 receives the broadcast message, determine whether an action is registered in an owner list, determine whether an owner of the action registered in the owner list matches the sender application, and in case that the owner of the action registered in the owner list matches the sender application, control the broadcast message to be transmitted from the framework 145 to a receiver application (e.g., the receiver application 420 of FIG. 4).

In an embodiment of the disclosure, the processor 120 may control the receiver application (e.g., the receiver application 420 of FIG. 4) to perform an operation corresponding to an action included in the broadcast message.

In an embodiment of the disclosure, the processor 120 may perform control so as to block the broadcast message from being transmitted from the framework 145 to the receiver application (e.g., the receiver application 420 of FIG. 4) in case that the owner of the action registered in the owner list is different from the sender application.

In an embodiment of the disclosure, the processor 120 may control the sender application to be registered in the owner list, based on the framework 145 in case that the action is not registered in the owner list.

In an embodiment of the disclosure, the processor 120 may control the framework 145 to register and/or delete an action and an owner corresponding to the action in and/or from the owner list.

The processor 120 may control the owner list to be transmitted from the framework 145 to the receiver application (e.g., the receiver application 420 of FIG. 4) according to a request for reading the owner list from the receiver application (e.g., the receiver application 420 of FIG. 4).

In an embodiment of the disclosure, the processor 120 may control the owner list to be transmitted from the framework 145 to the receiver application (e.g., the receiver application 420 of FIG. 4) through an application programming interface (API).

In an embodiment of the disclosure, the processor 120 may control the receiver application (e.g., the receiver application 420 of FIG. 4) to verify, based on the owner list, whether an owner of the registered action matches the sender application, in case that the owner of the registered action matches the sender application, transmit, to the framework 145, a first response message of verifying that reception from the sender application is allowed, and control the receiver application (e.g., the receiver application 420 of FIG. 4) to perform an operation corresponding to an action included in the broadcast message.

In an embodiment of the disclosure, the processor 120 may in case that the framework 145 receives the first response message, control the owner list to be managed so that the sender application corresponds to the action included in the broadcast message and the owner of the action.

In an embodiment of the disclosure, the processor 120 may in case that the owner of the registered action is different from the sender application, block the broadcast message and transmit, to the framework 145, a second response message of verifying that the sender application is untrusted.

In an embodiment of the disclosure, a communication method between applications may include controlling a broadcast message to be generated through a sender application, in case that a framework 145 receives the broadcast message, determining whether an action is registered in an owner list, determining whether an owner of the action registered in the owner list matches the sender application, and in case that the owner of the action registered in the owner list matches the sender application, controlling the broadcast message to be transmitted from the framework 145 to a receiver application (e.g., the receiver application 420 of FIG. 4).

In an embodiment of the disclosure, the communication method between applications may include controlling the receiver application (e.g., the receiver application 420 of FIG. 4) to perform an operation corresponding to an action included in the broadcast message.

In an embodiment of the disclosure, the communication method between applications may include performing control so as to block the broadcast message from being transmitted from the framework 145 to the receiver application (e.g., the receiver application 420 of FIG. 4) in case that the owner of the action registered in the owner list is different from the sender application.

In an embodiment of the disclosure, the communication method between applications may include controlling the sender application to be registered in the owner list, based on the framework 145 in case that the action is not registered in the owner list.

In an embodiment of the disclosure, the communication method between applications may include controlling the framework 145 to register and/or delete an action and an owner corresponding to the action in and/or from the owner list.

In an embodiment of the disclosure, the communication method between applications may include controlling the owner list to be transmitted from the framework 145 to the receiver application (e.g., the receiver application 420 of FIG. 4) according to a request for reading the owner list from the receiver application (e.g., the receiver application 420 of FIG. 4).

In an embodiment of the disclosure, the communication method between applications may include controlling the owner list to be transmitted from the framework 145 to the receiver application (e.g., the receiver application 420 of FIG. 4) through an application programming interface (API).

In an embodiment of the disclosure, the communication method between applications may include controlling the receiver application (e.g., the receiver application 420 of FIG. 4) to verify, based on the owner list, whether an owner of the registered action matches the sender application, in case that the owner of the registered action matches the sender application, transmitting, to the framework 145, a first response message of verifying that reception from the sender application is allowed, and controlling the receiver application (e.g., the receiver application 420 of FIG. 4) to perform an operation corresponding to an action included in the broadcast message

In an embodiment of the disclosure, the communication method between applications may include in case that the framework 145 receives the first response message, controlling the owner list to be managed so that the sender application corresponds to the action included in the broadcast message and the owner of the action.

In an embodiment of the disclosure, the communication method between applications may include in case that the owner of the registered action is different from the sender application, blocking the broadcast message and transmitting, to the framework 145, a second response message of verifying that the sender application is untrusted.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a memory; and
a processor,
wherein the processor is configured to:
perform control to generate a broadcast message through a sender application;
in case that a framework receives the broadcast message, determine whether an action is registered in an owner list;
determine whether an owner of the action registered in the owner list matches the sender application; and
in case that the owner of the action registered in the owner list matches the sender application, perform control to transmit the broadcast message from the framework to a receiver application.

2. The electronic device of claim 1, wherein the processor is configured to control the receiver application to perform an operation corresponding to an action included in the broadcast message.

3. The electronic device of claim 1, wherein the processor is configured to perform control to block the broadcast message from being transmitted from the framework to the receiver application in case that the owner of the action registered in the owner list is different from the sender application.

4. The electronic device of claim 1, wherein the processor is configured to perform control to register the sender application in the owner list, based on the framework, in case that the action is not registered in the owner list.

5. The electronic device of claim 1, wherein the processor is configured to control the framework to register and/or delete an action and an owner corresponding to the action in and/or from the owner list.

6. The electronic device of claim 1, wherein the processor is configured to perform control to transmit the owner list from the framework to the receiver application according to a request for reading the owner list from the receiver application.

7. The electronic device of claim 6, wherein the processor is configured to perform control to transmit the owner list from the framework to the receiver application through an application programming interface (API).

8. The electronic device of claim 6, wherein the processor is configured to:
control the receiver application to verify, based on the owner list, whether an owner of the registered action matches the sender application;
in case that the owner of the registered action matches the sender application, transmit, to the framework, a first response message of verifying that reception from the sender application is allowed;
perform, by the receiver application, an operation corresponding to an action included in the broadcast message;
in case that the framework receives the first response message, perform control to manage the owner list so that the sender application corresponds to the action included in the broadcast message and the owner of the action; and
in case that the owner of the registered action is different from the sender application, block the broadcast message and transmit, to the framework, a second response message of verifying that the sender application is untrusted.

9. A communication method between applications, the method comprising:
performing controlling to generate a broadcast message through a sender application;
in case that a framework receives the broadcast message, determining whether an action is registered in an owner list;
determining whether an owner of the action registered in the owner list matches the sender application; and
in case that the owner of the action registered in the owner list matches the sender application, performing control to transmit the broadcast message from the framework to a receiver application.

10. The method of claim 9, comprising controlling the receiver application to perform an operation corresponding to an action included in the broadcast message.

11. The method of claim 9, comprising performing control to block the broadcast message from being transmitted from the framework to the receiver application in case that the owner of the action registered in the owner list is different from the sender application.

12. The method of claim 9, comprising performing control to register the sender application in the owner list, based on the framework, in case that the action is not registered in the owner list.

13. The method of claim 9, comprising controlling the framework to register and/or delete an action and an owner corresponding to the action in and/or from the owner list.

14. The method of claim 9, comprising:
performing control to transmit the owner list from the framework to the receiver application according to a request for reading the owner list from the receiver application; and
performing control to transmit the owner list from the framework to the receiver application through an application programming interface (API).

15. The method of claim 14, comprising:
controlling the receiver application to verify, based on the owner list, whether an owner of the registered action matches the sender application;
in case that the owner of the registered action matches the sender application, transmitting, to the framework, a first response message of verifying that reception from the sender application is allowed;
performing, by the receiver application, an operation corresponding to an action included in the broadcast message;
in case that the framework receives the first response message, performing control to manage the owner list so that the sender application corresponds to the action included in the broadcast message and the owner of the action; and
in case that the owner of the registered action is different from the sender application, blocking the broadcast message and transmitting, to the framework, a second response message of verifying that the sender application is untrusted.
